# EUROPÄISCHE PATENTSCHRIFT

(11) **EP 2 795 139 B1**
(45) Veröffentlichungstag und Bekanntmachung des Hinweises auf die Patenterteilung: **19.10.2016**
(21) Anmeldenummer: 12781339.2
(22) Anmeldetag: 08.11.2012
(51) Int. Cl.: F16B 5/02, F16B 11/00

(54) **VERBINDUNGSELEMENT**
CONNECTING ELEMENT
ÉLÉMENT DE LIAISON

(30) Priorität: 22.12.2011 DE 102011089519
(43) Veröffentlichungstag der Anmeldung: 29.10.2014
(73) Patentinhaber: Bayerische Motoren Werke Aktiengesellschaft, 80809 München (DE)
(72) Erfinder: NIEKERK, Johann, 80993 München (DE)
(86) Internationale Anmeldenummer: PCT/EP2012/072134
(87) Internationale Veröffentlichungsnummer: WO 2013/091991

(56) Entgegenhaltungen:
- DE-A1- 3 229 080
- DE-A1- 10 304 361
- US-A- 4 038 801

## Beschreibung

Die vorliegende Erfindung betrifft eine Bauteilverbindung gemäß dem Oberbegriff des Patentanspruches 1.

Eine derartige Bauteilverindung ist aus der DE 32 29 080 A1 bekannt. Zum relevanten Stand der Technik zählen ferner die US 4 038 801 A und die DE 103 04 361 A1.

Aufgabe der Erfindung ist es, eine Bauteilverbindung mit einem vielseitig einsetzbaren Verbindungselement zum Verbinden zweier Bauteile zu schaffen, das in gewissem Umfang auch Toleranzen, die bei der Positionierung der miteinander zu verbindenden Bauteile auftreten können, ausgleichen kann.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Der Erfindung liegt die Idee zugrunde, eine Bauteilverbindung mit einem Verbindungselement zu schaffen, das einem "Kugelgelenk" ähnelt. Ein Verbindungselement gemäß der Erfindung weist ein einer Gelenkpfanne ähnelndes "Pfannenteil" auf, das mit einem ersten Bauteil zu verbinden ist, und ein in das Pfannenteil eingesetztes "kugelartiges Element", das in dem Pfannenteil schwenkbar ist. Von dem kugelartigen Element steht ein "Funktionselement" ab, welches zur Verbindung mit einem zweiten Bauteil vorgesehen ist. Vergleichbar mit einem Kugelgelenk ist das kugelartige Element und das davon abstehende Funktionselement schwenkbar in Bezug auf das Pfannenteil angeordnet. Durch Verschwenken des kugelartigen Elements und des damit verbundenen Funktionselements können in begrenztem Umfang Toleranzen, die bei der Relativpositionierung der beiden miteinander zu verbindenden Bauteile auftreten können, "ausgeglichen" werden.

Der Begriff "kugelartiges Element" ist breit zu interpretieren. Es muss sich dabei nicht notwendigerweise um eine Vollkugel handeln. Es kann sich auch um eine Kugelkalotte handeln, die ein Verschwenken des kugelartigen Elements in bzw. relativ zu dem Pfannenteil ermöglicht.

Nach einer Weiterbildung der Erfindung weist das Funktionselement ein Gewinde zum Verschrauben mit dem zweiten Bauteil auf. Das Funktionselement kann beispielsweise als Gewindestift, d. h. als stiftartiger Abschnitt mit einem Außengewinde, ausgebildet sein.

Prinzipiell könnte aber in dem Funktionselement auch ein Innengewinde vorgesehen sein, in das z. B. eine Schraube eingeschraubt werden kann, über die das Funktionselement mit dem zweiten Bauteil verbunden wird.

Alternativ dazu kann das Funktionselement auch als mutterartiges Element mit einem Innengewinde ausgebildet sein.

Der Außenumfang des Funktionselements kann auch als "Mehrkant" ausgebildet sein, vergleichbar oder identisch mit dem "Mehrkant" einer Schraubenmutter.

Die Erfindung umfasst insbesondere auch eine Bauteilverbindung an sich, bei der das Pfannenteil des oben beschriebenen Verbindungselements in ein Durchgangsloch oder in eine Mulde, Vertiefung o. ä. des ersten Bauteils eingesetzt oder in anderer Weise mit dem ersten Bauteil verbunden ist. Das Pfannenteil kann mit einem Rand bzw. einem Überstand versehen sein, welcher das Durchgangsloch, die Vertiefung, die Mulde etc. übergreift.

Ferner kann vorgesehen sein, dass das Pfannenteil, oder genauer gesagt, die Außenkontur oder ein Teil der Außenkontur des Pfannenteils, formschlüssig mit dem ersten Bauteil verrastet ist.

Hierzu kann an einer Außenseite des Pfannenteils mindestens ein Rastelement vorgesehen sein, welches das Durchgangsloch auf einer dem Rand oder dem Randabschnitt abgewandten Seite des ersten Bauteils hintergreift.

Das Pfannenteil ist. mit dem ersten Bauteile verklebt.

Das Pfannenteil kann z. B. aus Metall, insbesondere aus Stahl oder aus Aluminium hergestellt sein. Alternativ dazu kann es auch aus einem Kunststoffmaterial hergestellt sein.

Ebenso können das Funktionselement und/oder das kugelartige Element aus Metall, insbesondere aus Stahl oder Aluminium hergestellt sein. Alternativ dazu können auch das Funktionselement und/oder das kugelartige Element aus einem Kunststoffmaterial hergestellt sein.

Die Erfindung ist äußerst breit einsetzbar. Bei einem oder beiden der miteinander zu verbindenden Bauteile kann es sich z. B. um Fahrzeugteile, insbesondere um Karosserieteile eines Fahrzeugs handeln. Eines oder beide der miteinander zu verbindenden Bauteile können ganz oder teilweise aus Kunststoff, insbesondere aus einem faserverstärkten Kunststoffmaterial bestehen.

Die Erfindung ist insbesondere für so genannte "Mischbau-Anwendungen" geeignet, d. h. für Anwendungen, bei denen Bauteile unterschiedlicher

Materialien über ein Verbindungselement miteinander zu verbinden sind. Derartige Mischbau-Anwendungen sind in zunehmendem Maße im Automobilbau anzutreffen. Dabei geht es beispielsweise darum, ein erstes, aus Metall (z. B. Stahl oder Aluminium) bestehendes Bauteil mit einem Kunststoffbauteil (z. B. einem faserverstärkten Kunststoffbauteil) zu verbinden. Hierfür sind Verbindungselemente gemäß der Erfindung hervorragend geeignet.

Im Folgenden wird die Erfindung im Zusammenhang mit der Zeichnung näher erläutert. Es zeigen:
Figuren 1, 2 ein erstes Ausführungsbeispiel gemäß der Erfindung;
Figuren 3,4 ein zweites bzw. drittes Ausführungsbeispiel gemäß der Erfindung und
Figuren 5,6 ein viertes Ausführungsbeispiel gemäß der Erfindung.

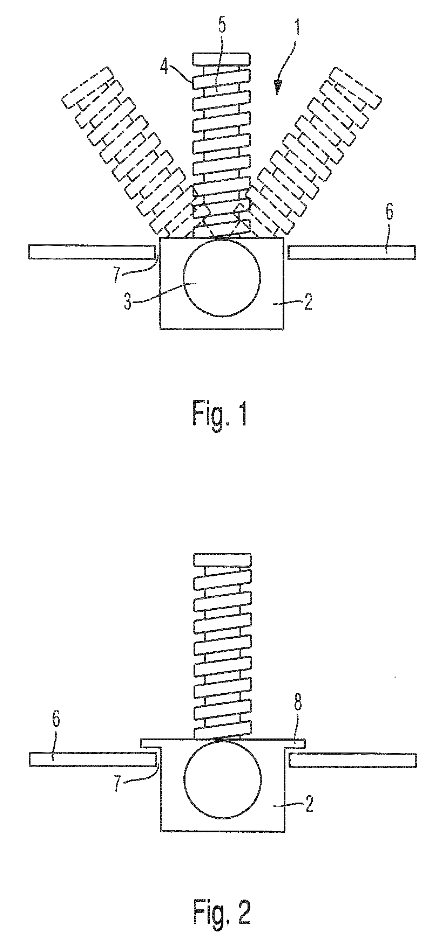

Die Figuren 1 und 2 zeigen ein Verbindungselement 1, welches ein Pfannenteil 2 aufweist, in das ein kugelartiges Element 3 eingesetzt ist. Von dem kugelartigen Element 3 steht ein mit einem Außengewinde 4 versehener Stift 5 ab. Der Stift 5 dient als Funktionselement, welches zur Verbindung mit einem zweiten hier nicht dargestellten Bauteil vorgesehen ist. Das kugelartige Element 3 und der davon abstehende Stift 5 können relativ zu bzw. in dem Pfannenteil 2 verschwenkt werden. Bei den in den Figuren 1, 2 gezeigten Ausführungsbeispielen ist das Pfannenteil 2 in eine in einem ersten Bauteil 6 vorgesehene Ausnehmung 7, bei der es sich hier um ein Durchgangsloch handelt, eingesetzt. Das Pfannenteil 2 ist mit dem ersten Bauteil 6 zusätzlich verklebt.

Bei dem in Figur 2 gezeigten Ausführungsbeispiel weist das Pfannenteil 2 einen das Loch 7 überkragenden, d. h. über den Rand des Lochs 7 überstehenden Rand bzw. Randabschnitt 8 auf. Der Rand bzw. Randabschnitt 8 übergreift also das Durchgangsloch 7.

Zusätzlich könnte auf einer dem Rand bzw. Randabschnitt 8 abgewandten Seite des ersten Bauteils 6 an einer Außenseite des Pfannenteils 2 ein Rastelement (nicht dargestellt) vorgesehen sein, über welches das Pfannenteil 2 formschlüssig mit dem ersten Bauteil 6 verrastet werden könnte.

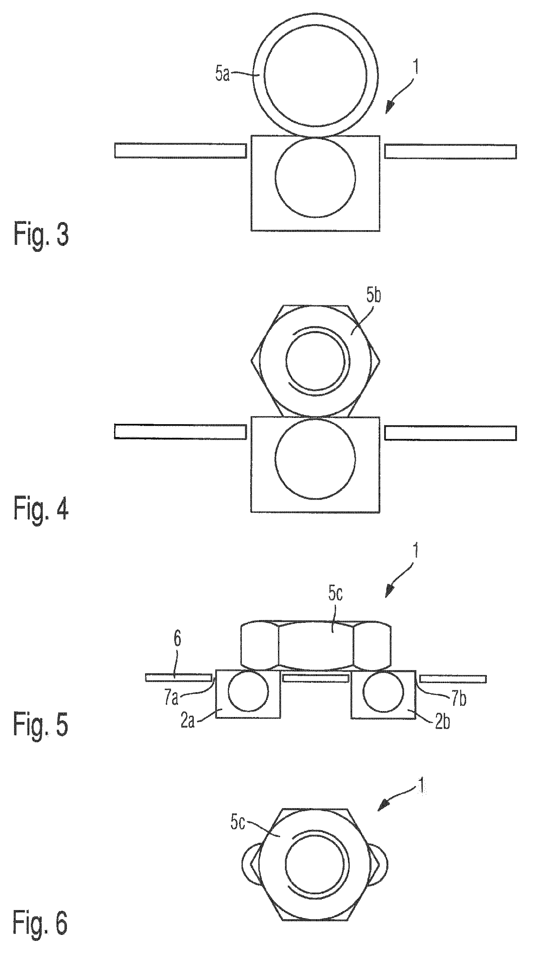

Die Figuren 3, 4 zeigen weitere Ausführungsbeispiele gemäß der Erfindung. Beim Ausführungsbeispiel der Figur 3 ist das Verbindungselement 1 anstatt eines Stifts als Ring 5a ausgebildet.

Beim Ausführungsbeispiel der Figur 4 ist das Funktionselement als Mutter 5b, welche ein Innengewinde aufweist, ausgebildet.

Die Ausführungsbeispiele der Figuren 5 und 6 zeigen ein Verbindungselement 1, welches zwei Pfannenteile 2a, 2b aufweist, die jeweils in ein in dem ersten Bauteil 6 vorgesehenes Loch 7a, 7b eingesetzt sind. Das Verbindungselement 1 weist zwar zwei Pfannenteile 2a, 2b aber nur ein Funktionselement auf, welches die beiden Pfannenteile 2a, 2b miteinander verbindet. Das Funktionselement ist hier, wie am besten aus Figur 6 ersichtlich ist, als Mutter 5c mit einem Innengewinde ausgebildet. Die Mutter 5c ist im Unterschied zum Ausführungsbeispiel der Figur 4 so angeordnet, dass sich die Längs- bzw. Gewindeachse der Mutter 5c in einer Richtung erstreckt, die im Wesentlichen senkrecht zu dem ersten Bauteil 6 ist.

## Patentansprüche

1. Bauteilverbindung, mit einem Verbindungselement zum Verbinden zweier Bauteile, wobei das Verbindungselement ein zur Verbindung mit einem ersten Bauteil (6) vorgesehenes Pfannenteil (2) aufweist, in das ein kugelartiges Element (3) eingesetzt ist, wobei von dem kugelartigen Element (3) ein Funktionselement (5) absteht, welches zur Verbindung mit einem zweiten Bauteil vorgesehen ist, wobei das Pfannenteil (2) in ein Durchgangsloch (7) oder in eine Vertiefung des ersten Bauteils (6) eingesetzt ist,
**dadurch gekennzeichnet,**
• **dass** das erste Bauteil (6) aus einem anderen Material besteht, als das zweite Bauteil,
• **dass** es sich bei dem ersten Bauteil (6) um ein Bauteil handelt, das ganz oder teilweise aus Kunststoff besteht und
• **dass** das Pfannenteil (2) mit dem ersten Bauteil (6) verklebt ist.

2. Bauteilverbindung nach Anspruch 1, **dadurch gekennzeichnet, dass** das kugelartige Element (3) und das davon abstehende Funktionselement (5) schwenkbar in Bezug auf das Pfannenteil (2) sind.

3. Bauteilverbindung nach Anspruch 1 oder 2, **dadurch gekennzeichnet, dass** das Funktionselement (5) ein Gewinde (4) zum Verschrauben mit dem zweiten Bauteil aufweist.

4. Bauteilverbindung nach einem der Ansprüche 1 bis 3, **dadurch gekennzeichnet, dass** das Funktionselement (5) einen Gewindestift (5) zum Verschrauben mit dem zweiten Bauteil aufweist.

5. Bauteilverbindung nach einem der Ansprüche 1 bis 3, **dadurch gekennzeichnet, dass** das Funktionselement (5) ein mutterartiges Element (5b, 5c) mit einem Innengewinde ist.

6. Bauteilverbindung nach einem der Ansprüche 1 bis 5, **dadurch gekennzeichnet, dass** das Pfannenteil (2) einen Rand oder einen Randabschnitt (8) aufweist, welcher das Durchgangsloch (7) übergreift.

7. Bauteilverbindung nach einem der Ansprüche 1 oder 6, **dadurch gekennzeichnet, dass** das Pfannenteil (2) formschlüssig mit dem ersten Bauteil (6) verrastet ist.

8. Bauteilverbindung nach Anspruch 7, **dadurch gekennzeichnet, dass** an einer Außenseite des Pfännenteils (2) mindestens ein Rastelement vorgesehen ist, welches das Durchgangsloch (7) auf einer dem Rand oder dem Randabschhitt (8) abgewandten Seite des ersten Bauteils (6) hintergreift.

9. Bauteilverbindung nach einem der Ansprüche 1 bis 8, **dadurch gekennzeichnet, dass** das Pfannenteil (2) aus Metall, insbesondere aus Stahl oder Aluminium, oder aus Kunststoff besteht.

10. Bauteilverbindung nach einem der Ansprüche 6 bis 12, **dadurch gekennzeichnet, dass** das Funktionselement (5) und/oder das kugelartige Element (3) aus Metall, insbesondere aus Stahl oder Aluminium oder aus Kunststoff besteht.

## Claims

1. A component connection, with a connecting element for connecting two components, wherein the connecting element has a socket part (2) which Is provided for connection with a first component (6) and into which a spherical element (3) is introduced, wherein projecting from the spherical element (3) Is a functional element (5) which is provided for connection with a second component, wherein the socket part (2) is introduced into a passage hole (7) or Into a recess in the first component (6), **characterised in that**
• the first component (6) consists of a different material compared to the second component,
• the first component (6) is a component which consists partly or completely of plastics material and
• the socket part (2) Is glued with the first component (6).

2. A component connection according to claim 1, **characterised in that** the spherical element (3) and the functional element (5) projecting therefrom are swlvellable with respect to the socket part (2).

3. A component connection according to claim 1 or claim 2, **characterised in that** the functional element (5) has a thread (4) for screwing together with the second component.

4. A component connection according to any one of claims 1 to 3, **characterised in that** the functional element (5) has a threaded pin (5) for screwing together with the second component.

5. A component connection according to any one of claims 1 to 3, **characterised in that** the functional element (5) is a nut-type element (5b, 5c) with an internal thread.

6. A component connection according to any one of claims 1 to 5, **characterised in that** the socket part (2) has an edge or an edge portion (8) which overlaps the passage hole (7).

7. A component connection according to any one of claims 1 or 6, **characterised In that** the socket part (2) is locked positively with the first component (6).

8. A component connection according to claim 7, **characterised in that** provided on an outer face of the socket part (2) is at least one detent element which engages behind the passage hole (7) on a side of the first component (6) remote from the edge or the edge portion (8).

9. A component connection according to any one of claims 1 to 8, **characterised in that** the socket part (2) consists of metal, especially of steel or aluminium, or consists of plastics material.

10. A component connection according to any one of claims 6 to 12, **characterised in that** the functional element (5) and/or the spherical element (3) consists of metal, especially of steel or aluminium, or consists of plastics material.

## Revendications

1. °) Liaison de composants comportant un élément de liaison pour relier deux composants,
- l'élément de liaison ayant une pièce (2) en forme de coupelle pour être reliée à un premier composant (6), cette pièce recevant un élément (3) en forme de rotule,
* un élément fonctionnel (5) est en saillie de l'élément en forme de rotule (3), qui est prévu pour être relié à un second composant,
* la pièce en forme de coupelle (2) ayant un orifice traversant (7) ou étant logée dans une cavité du premier composant (6),
liaison **caractérisée en ce que**
- le premier composant (6) est en un autre matériau que le second composant,
- le premier composant (6) est un composant complètement ou en partie en matière plastique, et
- la pièce en forme de coupelle (2) est collée au premier composant (6).

2. °) Liaison de composants selon la revendication 1,
**caractérisée en ce que**
l'élément en forme de coupelle (3) et l'élément fonctionnel (5) en saillie de celui-ci sont pivotants par rapport à la pièce en forme de coupelle (2).

3. °) Liaison de composants selon la revendication 1 ou 2,
**caractérisée en ce que**
l'élément fonctionnel (5) a un filetage (4) pour être vissé au second composant.

4. °) Liaison de composants selon l'une des revendications 1 à 3,
**caractérisée en ce que**
l'élément fonctionnel (5) comporte une tige filetée (5) pour être vissée au second composant.

5. °) Liaison de composants selon l'une des revendications 1 à 3,
**caractérisée en ce que**
l'élément fonctionnel (5) est un élément en forme d'écrou (5b, 5c) ayant un filetage intérieur.

6. °) Liaison de composants selon l'une des revendications 1 à 5,
**caractérisée en ce que**
la pièce en forme de coupelle (2) a un bord ou un segment de bord (8) qui dépasse de l'orifice traversant (7).

7. °) Liaison de composants selon l'une des revendications 1 ou 6,
**caractérisée en ce que**
la pièce en forme de coupelle (2) est accrochée au premier composant (6) par une liaison par la forme.

8. °) Liaison de composants selon la revendication 7,
**caractérisée en ce que**
le côté extérieur de la pièce en forme de coupelle (2) a au moins un élément d'accrochage qui vient prendre derrière l'orifice traversant (7) sur le côté du premier composant (6) à l'opposé du bord ou du segment de bord (8).

9. °) Liaison de composants selon l'une des revendications 1 à 8,
**caractérisée en ce que**
la pièce en forme de coupelle (2) est en métal et notamment en acier ou aluminium ou en matière plastique.

10. °) Liaison de composants selon l'une des revendications 6 à 12,
**caractérisée en ce que**
l'élément fonctionnel (5) et/ou l'élément en forme de rotule (3) est en métal notamment en acier ou en aluminium ou en matière plastique.
